# EUROPÄISCHE PATENTANMELDUNG

(11) **EP 2 704 110 A1**
(43) Veröffentlichungstag der Anmeldung: **05.03.2014**
(21) Anmeldenummer: 12183028.5
(22) Anmeldetag: 04.09.2012
(51) Int. Cl.: G07F 9/02, G07F 9/08, G06Q 20/18

(54) **Verfahren zur Prävention von Geldwäscheangriffen**

(71) Anmelder: Wincor Nixdorf International GmbH, 33106 Paderborn (DE)
(72) Erfinder: Starke, Christian, 33098 Paderborn (DE); Neumann, Thorsten, 33106 Paderborn (DE)
(74) Vertreter: Schröder, Christoph

(57) **Zusammenfassung**

Bei einem Verfahren zur Prävention von Geldwäscheangriffen an einer Bezahlvorrichtung ermittelt eine Steuereinrichtung (17) einer Bezahlvorrichtung (1) einen im Rahmen eines Bezahlvorgangs zu zahlenden, ersten Betrag, ein zweiter Betrag wird an einer Zahleinrichtung (13, 14) der Bezahlvorrichtung (1) durch einen Nutzer mittels Übergabe von Bargeld gezahlt, und die Steuereinrichtung (17) erfasst den gezahlten, zweiten Betrag erfasst. Dabei ist vorgesehen, dass die Steuervorrichtung (17) den zu zahlenden, ersten Betrag und/oder den gezahlten, zweiten Betrag anhand von mindestens einem Überwachungskriterium auswertet, in Abhängigkeit von der Auswertung auf einen möglichen Geldwäscheangriff schließt und eine Gegenmaßnahme veranlasst. Auf diese Weise wird ein Verfahren zur Prävention von Geldwäscheangriffen angegeben, das auf einfache, kostengünstige Weise möglichst ohne aufwändige bauliche Veränderungen von Bezahlvorrichtungen eine Prävention von Geldwäscheangriffen ermöglicht.

## Beschreibung

Die Erfindung betrifft ein Verfahren zur Prävention von Geldwäscheangriffen einer Bezahlvorrichtung nach dem Oberbegriff des Anspruchs 1 sowie eine Bezahlvorrichtung zur Durchführung eines Bezahlvorgangs zur Durchführung eines Verfahrens zur Prävention von Geldwäscheangriffen.

Bei einem derartigen Verfahren ermittelt eine Steuereinrichtung einer Bezahlvorrichtung einen im Rahmen eines Bezahlvorgangs zu zahlenden, ersten Betrag. Ein zweiter Betrag wird an einer Zahleinrichtung der Bezahlvorrichtung durch einen Nutzer mittels Übergabe von Bargeld gezahlt. Die Steuereinrichtung erfasst diesen gezahlten, zweiten Betrag.

Bei einer derartigen Bezahlvorrichtung kann es sich beispielsweise um eine so genannte Selbstzahlerkasse handeln, an der z. B. in einem Ladengeschäft ein Kunde Waren selbsttätig bezahlen kann. Hierzu werden an der Bezahlvorrichtung die Waren beispielsweise über eine geeignete Scanvorrichtung erfasst, um hieraus den zu zahlenden Betrag zu ermitteln. Der zu zahlende Betrag wird dem Kunden angezeigt, und der Kunde nimmt die Bezahlung z.B. durch Einwerfen von Münzen oder Einführen von Geldscheinen, also durch Zahlung von Bargeld, vor. Eine Steuereinrichtung erfasst den gezahlten Betrag und ermittelt beispielsweise, ob der gezahlte Betrag ausreichend ist. Bei einer solchen Bezahlvorrichtung kann es sich grundsätzlich aber auch um andere Vorrichtungen handeln, bei denen eine Zahlung mittels Bargeld vorgenommen werden kann. Beispielsweise kann es sich bei der Bezahlvorrichtung auch um einen Münzfernsprecher, einen Fahrkartenautomaten, einen Getränke- oder anderen Warenautomat (z.B. eine so genannte "Vending Machine") oder dergleichen handeln.

Grundsätzlich kann an solchen Bezahlvorrichtungen auch eine Zahlung in bargeldloser Weise beispielsweise mittels Kredit- oder Geldkarte möglich sein. Die vorliegende Erfindung betrifft in diesem Zusammenhang aber die Zahlung mittels Bargeld.

Unter der Übergabe von Bargeld wird in diesem Zusammenhang das Einwerfen von Münzen oder das Einführen von Geldscheinen an einer dafür bestimmten Zahleinrichtung, beispielsweise einer Münzeinwurfeinrichtung oder einer Geldscheineinführeinrichtung, verstanden.

An Bezahlvorrichtungen kann es zu Geldwäscheangriffen kommen. Im Zuge von solchen Geldwäscheangriffen wird versucht, falsches Geld - also falsche Münzen oder falsche Geldscheine - gegen echtes Geld umzutauschen, beispielsweise indem falsche Münzen oder falsche Geldscheine an einer Bezahlvorrichtung eingeworfen werden, um Wechselgeld in Form echter Münzen und/oder echter Geldscheine zu erhalten. Beispielsweise kann auf diese Weise ein vergleichsweise geringer zu zahlender Betrag mittels eines verhältnismäßig sehr viel größeren Betrags gezahlt werden, um auf diese Weise einen großen Wechselgeldbetrag und damit echtes Geld in großem Umfang zu erhalten.

Herkömmlich wird an Bezahlvorrichtungen zur Prävention von Geldwäscheangriffen die Echtheit von Münzen und Geldscheinen überprüft, indem beispielsweise eingeworfene Münzen induktiv geprüft oder Geldscheine anhand von Sicherheitsmerkmalen untersucht werden. Dies kann jedoch aufwändig und ggf. unsicher sein, weil z.B. Fremd- oder Falschmünzen, die ein ähnliches Material wie echte Münzen verwenden, nicht mit ausreichender Sicherheit erkannt werden können.

Bei einem aus der US 7,805,362 bekannten Verfahren zur Prüfung eines Geldwäscherisikos werden unterschiedliche Risikofaktoren berücksichtigt, beispielsweise ein Produktrisiko oder örtliche und persönliche Risikoattribute. Die US 7,805,362 nimmt in diesem Zusammenhang jedoch keinen Bezug auf die Überwachung eines konkreten Einzahlungsvorgangs an einer Bezahlvorrichtung.

Die DE 10 2007 024 301 A1 beschreibt bezüglich einer Münzverarbeitungseinrichtung einer Bezahlvorrichtung, dass eingeworfene Münzen bei einer Geldrückgabe auch wieder ausgegeben werden, so dass ein Geldwäscherisiko zumindest reduziert ist.

Aufgabe der vorliegenden Erfindung ist es, ein Verfahren zur Prävention von Geldwäscheangriffen und eine Bezahlvorrichtung zur Durchführung eines solchen Verfahrens anzugeben, die auf einfache, kostengünstige Weise möglichst ohne aufwändige bauliche Veränderungen von Bezahlvorrichtungen eine Prävention von Geldwäscheangriffen ermöglicht.

Diese Aufgabe wird durch einen Gegenstand mit den Merkmalen des Anspruchs 1 gelöst.

Demnach wertet die Steuervorrichtung den zu zahlenden, ersten Betrag und/oder den gezahlten, zweiten Betrag anhand von mindestens einem Überwachungskriterium aus, schließt in Abhängigkeit von der Auswertung auf einen möglichen Geldwäscheangriff und veranlasst eine Gegenmaßnahme.

Die vorliegende Erfindung geht von dem Gedanken aus, das Risiko eines Geldwäscheangriffs durch Auswerten des zu zahlenden, ersten Betrags und/oder des gezahlten, zweiten Betrags zu erreichen. Die Auswertung erfolgt dabei anhand von vorbestimmten Überwachungskriterien, anhand derer der zu zahlende, erste Betrag und/oder der gezahlte, zweite Betrag geprüft werden, um in Abhängigkeit von dem Ergebnis dieser Prüfung das Risiko eines Geldwäscheangriffs zu bewerten und ggf. eine Gegenmaßnahme einzuleiten.

Beispielsweise kann vorgesehen sein, dass als Überwachungskriterium die Anzahl der übergebenen Geldmünzen oder Geldscheine für jeden Stücklungswert ausgewertet wird. Dahinter steckt, dass beispielsweise bei einer Bezahlung mit Münzen für jeden Stücklungswert, also für jeden Nennbetrag einer Münze, eine Anzahl von Münzen eingeworfen wird, wobei anhand der eingeworfenen Anzahl der Münzen für einen Stücklungswert geprüft werden kann, ob eine maximal zulässige Anzahl für den Stücklungswert überschritten wird. Auf diese Weise kann beispielsweise ermittelt werden, wie viel 1-Euro-Münzen, 2-Euro-Münzen oder 10-Cent-Münzen eingeworfen werden. Überschreitet beispielsweise die Anzahl der eingeworfenen 1-Euro-Münzen die maximal zulässige Anzahl von 1-Euro-Münzen, so wird dies entsprechend registriert und ggf. eine Gegenmaßnahme eingeleitet.

Die maximale Anzahl der übergebenen Geldmünzen oder Geldscheine kann in diesem Zusammenhang für jeden Stücklungswert unterschiedlich sein. Beispielsweise kann die maximal zulässige Anzahl von 10-Cent-Münzen größer sein als die maximal zulässige Anzahl von 2-Euro-Münzen. Die maximal zulässige Anzahl kann für jeden Stückelungswert von einem Anwender an einer Bezahlvorrichtung ggf. frei konfiguriert werden.

Die maximal zulässige Anzahl für einen Stücklungswert kann hierbei auch von dem zu zahlenden Betrag abhängen. So kann beispielsweise für einen großen zu zahlenden Betrag die maximal zulässige Anzahl für einen Stücklungswert größer sein als für einen kleinen zu zahlenden Betrag.

Als zusätzliches oder alternatives Überwachungskriterium kann auch das Verhältnis des gezahlten, zweiten Betrags und des zu zahlenden, ersten Betrags ausgewertet werden. Die Auswertung kann hierbei durch Verhältnisbildung (Division) oder Differenzbildung (Subtraktion) zwischen dem gezahlten und dem zu zahlenden Betrag erfolgen. Anhand des Verhältnisses des gezahlten Betrags und des zu zahlenden Betrags wird dann geprüft, ob das Verhältnis einen maximal zulässigen Überzahlfaktor überschreitet. Ist der gezahlte Betrag um einen Faktor, der den Überzahlfaktor überschreitet, größer als der zu zahlende Betrag, so wird dies registriert und ggf. eine Gegenmaßnahme eingeleitet.

Als zusätzliches oder alternatives Überwachungskriterium kann zudem auch ein lokal oder regional auftretendes Bezahlverhalten an einer Bezahlvorrichtung oder an mehreren unterschiedlichen Bezahlvorrichtungen ausgewertet werden. Wird beispielsweise festgestellt, dass in einer Region, beispielsweise an Bezahlvorrichtungen innerhalb eines Stadtgebiets (z.B. innerhalb von Berlin), innerhalb eines bestimmten Zeitraums (z.B. innerhalb von einer Woche) es vermehrt zu ungewöhnlichen Bezahlvorgängen kommt, so kann dies registriert und ggf. eine Gegenmaßnahme eingeleitet werden. Ungewöhnliche Bezahlvorgänge können z.B. darin bestehen, dass Bezahlvorgänge vermehrt mit Münzen oder Geldscheinen eines bestimmten Stückelungswerts erfolgen. Kommen eine Vielzahl vergleichbarer Bezahlvorgänge an unterschiedlichen Bezahlvorrichtungen in einer Region innerhalb eines engen Zeitraums vor, so kann dies darauf hindeuten, dass in krimineller Weise versucht wird, Falschgeld in echtes Geld zu tauschen.

Mehrere Bezahlvorrichtungen sind hierzu vorteilhafterweise kommunikativ miteinander vernetzt, so dass als Überwachungskriterium beispielsweise das Bezahlverhalten an unterschiedlichen Bezahlvorrichtungen innerhalb eines Netzwerks ausgewertet werden kann.

Anhängig von der Auswertung des zu zahlenden Betrags und/oder des gezahlten Betrags anhand von Überwachungskriterien wird eine Gegenmaßnahme eingeleitet, um präventiv einen Geldwäscheangriff zu unterbinden. Die Gegenmaßnahme kann hierbei beispielsweise eingeleitet werden, wenn der Auswertung nur eines Überwachungskriteriums ergibt, dass das Risiko eines Geldwäscheangriffs vorliegt, beispielsweise weil eine maximal zulässige Anzahl für eine Stücklungswert von eingeworfenen Münzen oder ein Überzahlfaktor überschritten ist. Vorteilhafterweise sind aber mehrere Überwachungskriterien kumulativ auszuwerten, wobei eine Gegenmaßnahme dann eingeleitet wird, wenn die Prüfung anhand der mehreren Überwachungskriterien ergibt, dass das Risiko eines Geldwäscheangriffs besteht. So kann eine Gegenmaßnahme beispielsweise nur dann eingeleitet werden, wenn die Anzahl der für einen Bezahlvorgang verwendeten Geldmünzen oder Geldscheine für einen Stücklungswert eine maximal zulässige Anzahl für diesen Stücklungswert überschreitet und zusätzlich das Verhältnis des gezahlten Betrags und des zu zahlenden Betrags einen maximal zulässigen Überzahlfaktor überschreitet.

Als Gegenmaßnahme kommen grundsätzlich unterschiedliche Maßnahmen in Betracht, wobei eine einzige Maßnahme oder auch mehrere Maßnahmen in Kombination eingeleitet werden können. Beispielsweise kann die Auszahlung eines sich aus der Differenz von dem gezahlten, zweiten Betrag und dem zu zahlenden, ersten Betrag ergebenen Wechselbetrags nicht vorgenommen werden, so dass bei der Gefahr eines Geldwäscheangriffs die Auszahlung von Wechselgeld unterbleibt. Zusätzlich oder alternativ kann eine Kameravorrichtung zur Aufzeichnung des Nutzers aktiviert werden, ein akustischer Alarm ausgelöst werden und/oder mittels einer Kommunikationseinrichtung eine Nachricht zum Alarmieren von Aufsichtspersonal erzeugt werden. Auch andere Maßnahmen sind denkbar. So kann beispielsweise auch die Annahme von einer betroffenen Münzsorte eines bestimmten Stücklungswerts gesperrt werden, so dass ein Kunde z. B. nicht mit 1-Euro-Münzen bezahlen kann, wenn die Anzahl der bereits eingeworfenen 1-Euro-Münzen die maximal zulässige Anzahl von 1-Euro-Münzen überschreitet oder wenn innerhalb einer Region eine vermehrte Bezahlung mit 1-Euro-Münzen in unterschiedlichen Bezahlvorgängen festgestellt wird.

Die Aufgabe wird darüber hinaus durch eine Bezahlvorrichtung zur Durchführung eines Bezahlvorgangs zur Durchführung eines Verfahrens zur Prävention von Geldwäscheangriffen gelöst. Die Bezahlvorrichtung weist eine Steuereinrichtung auf, die ausgebildet ist, einen im Rahmen eines Bezahlvorgangs zu zahlenden, ersten Betrag zu ermitteln und einen zweiten Betrag, der an einer Zahleinrichtung der Bezahlvorrichtung durch einen Nutzer mittels Übergabe von Bargeld gezahlt wird, zu erfassen. Dabei ist zusätzlich vorgesehen, dass die Steuervorrichtung ausgebildet ist, den zu zahlenden, ersten Betrag und/oder den gezahlten, zweiten Betrag anhand von mindestens einem Überwachungskriterium auszuwerten, in Abhängigkeit von der Auswertung auf einen möglichen Geldwäscheangriff zu schließen und eine Gegenmaßnahme zu veranlassen.

Die vorangehend für das Verfahren beschriebenen Vorteile und vorteilhaften Ausgestaltungen sind analog auch auf die Bezahlvorrichtung anzuwenden, so dass auf die obigen Ausführungen verwiesen wird. Die Bezahlvorrichtung ist vorteilhafterweise zur Durchführung eines Verfahrens zur Prävention von Geldwäscheangriffen nach der vorangehend beschriebenen Art ausgelegt.

Der der Erfindung zugrunde liegende Gedanke soll nachfolgend anhand der in den Figuren dargestellten Ausführungsbeispiele näher erläutert werden. Es zeigen:
- Fig. 1: eine schematische Ansicht einer Bezahlvorrichtung zur Durchführung eines Bezahlvorganges;
- Fig. 2: ein schematisches Ablaufdiagramm eines Ausführungsbeispiels eines Verfahrens zur Prävention von Geldwäscheangriffen an einer Bezahlvorrichtung; und
- Fig. 3: eine schematische Ansicht einer ersten Bezahlvorrichtung, die mit weiteren Bezahlvorrichtungen in einem Netzwerk vernetzt ist.

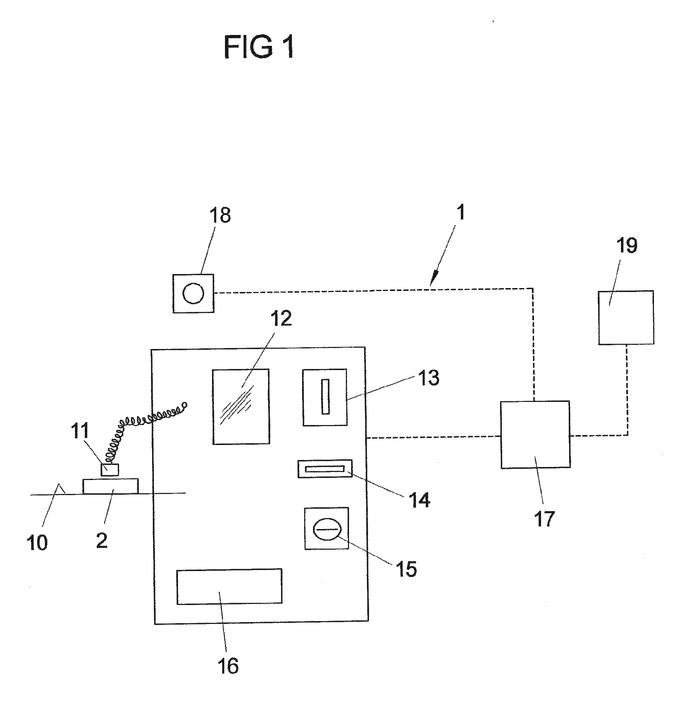

Fig. 1 zeigt in einer schematischen Ansicht eine Bezahlvorrichtung 1 in Form einer so genannten Selbstzahlerkasse, an der Waren 2 durch einen Kunden mittels einer Erfassungseinrichtung 11 in Form eines Lesegeräts zum Beispiel zum Einlesen eines Barcodes erfasst werden können. Die Bezahlvorrichtung 1 umfasst eine Ablagefläche 10 zum Ablegen von Waren 2, einen Bildschirm 12 zum Anzeigen der erfassten Waren 2 sowie eines zu zahlenden Geldbetrags, eine Zahleinrichtung 13 in Form einer Münzeinwurfeinrichtung zum Einwerfen von Münzen, eine Zahleinrichtung 14 in Form einer Geldscheineinführeinrichtung zum Einführen von Geldscheinen, einer Einrichtung 15 zum bargeldlosen Bezahlen beispielsweise mittels einer Kreditkarte oder einer Geldkarte und eine Geldausgabeeinrichtung 16 zum Ausgeben von Wechselgeld.

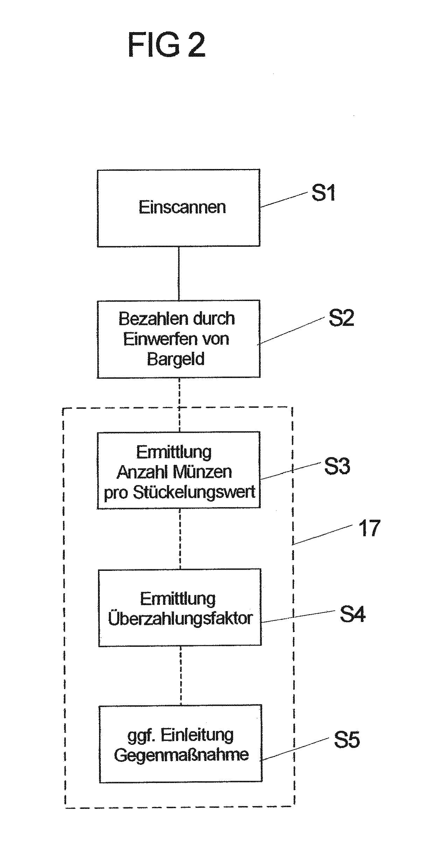

Zur Durchführung eines Bezahlvorganges mittels der Bezahlvorrichtung 1 liest ein Kunde mittels der Erfassungseinrichtung 11 zum Beispiel einen Barcode einer auf der Ablagefläche 10 abgelegten Ware 2 ein. Eine Bezeichnung der erfassten Ware 2 wird auf dem Bildschirm 12 angezeigt, und der Kunde erhält die Möglichkeit, weitere Waren 2 einzulesen oder einen Bezahlvorgang zum Bezahlen der Waren 2 einzuleiten. Dies ist in dem schematischen Ablaufdiagramm gemäß Fig. 2 in den Schritten S1 und S2 dargestellt.

Der Bezahlvorgang kann durch das Einwerfen von Münzen in die Zahleinrichtung 13 oder das Einführen von Geldscheinen in die Zahleinrichtung 14 erfolgen, um die Ware 2 mittels Bargeld zu bezahlen. Alternativ ist auch möglich, bargeldlos über die Einrichtung 15 beispielsweise mittels einer Kreditkarte oder Geldkarte zu bezahlen.

Der Bezahlvorgang wird gesteuert durch eine Steuereinrichtung 17 der Vorrichtung 1. Die Steuereinrichtung 17 steuert beispielsweise das Einlesen der Waren 2 mittels der Erfassungseinrichtung 11, das Anzeigen von Warenbezeichnungen, Warenpreisen und eines zu zahlenden Gesamtbetrages auf dem Bildschirm 12 sowie den Bezahlvorgang an sich mittels Bargeld an den Zahleinrichtungen 13, 14 oder bargeldlos an der Einrichtung 15.

Die Steuereinrichtung 17 ist dazu ausgelegt, beim Zahlen mittels Bargeld über die Zahleinrichtungen 13, 14 ein Verfahren zur Prävention von Geldwäscheangriffen durchzuführen, wie dies schematisch in Fig. 2 in den Schritten S3-S5 dargestellt ist. Im Rahmen dieses Verfahrens wird für eingeführte Münze oder Geldscheine für jeden Stücklungswert die Anzahl der eingegebenen Münzen oder Geldscheine ermittelt (Schritt S3). Zudem wird ein Überzahlungsfaktor ermittelt, indem das Verhältnis zwischen dem über die Zahleinrichtungen 13, 14 gezahlten Betrags und dem dem Gesamtpreis der Waren 2 entsprechenden zu zahlenden Betrag gebildet wird (Schritt S4). Anhand der Anzahl von eingegebenen Münzen oder Geldscheinen pro Stückelungswert wird geprüft, ob die Anzahl der Münzen oder Geldscheine für einen Stücklungswert eine maximal zulässige Anzahl für diesen Stücklungswert überschreitet. Für den Überzahlungsfaktor wird geprüft, ob der Überzahlungsfaktor größer ist als ein maximal zulässiger Überzahlungsfaktor. Abhängig von dieser Prüfung werden dann in Schritt S5 gegebenenfalls Gegenmaßnahmen eingeleitet, indem beispielsweise die Auszahlung von Wechselgeld unterbunden, Aufsichtspersonal benachrichtigt, ein akustischer Alarm ausgelöst oder andere Maßnahmen eingeleitet werden.

Unter einem Stückelungswert ist ein bestimmter Münzen- oder Geldscheintyp, beispielsweise eine 1-Euro-Münze zu verstehen. Die Anzahl von Münzen oder Geldscheinen pro Stücklungswert entspricht der Anzahl von für einen Stückelungswert eingegebenen Münzen oder Geldscheinen, beispielsweise der Anzahl der eingeworfenen 1-Euro-Münzen. Ist diese Anzahl größer als die maximal zulässige Anzahl für den jeweiligen Stücklungswert, so wird dies registriert und gegebenenfalls eine geeignete Gegenmaßnahme ausgelöst.

Beispielsweise kann im Rahmen eines Bezahlvorganges vorkommen, dass ein Betrag von 2,50 Euro zu zahlen ist. Eingezahlt wird über die Zahleinrichtung 13 z.B. ein Betrag in Münzen von 50 Euro in z.B. zwanzig 2-Euro-Münzen und zehn 1-Euro-Münzen. Die Anzahl von Münzen für den Stückelungswert "1 Euro" beträgt somit 10, die Anzahl für den Stücklungswert "2 Euro" 20. Ist die maximal zulässige Anzahl für den Stückelungswert "1 Euro" beispielsweise 12 und die maximal zulässige Anzahl für den Stückelungswert "2 Euro 18, so wird für den Stückelungswert "2 Euro" die maximal zulässige Anzahl überschritten, was entsprechend registriert wird.

Der Überzahlungsfaktor in dem genannten Beispiel beträgt 20 (50 Euro geteilt durch 2,50 Euro). Beträgt der maximal zulässige Überzahlungsfaktor beispielsweise 5, so wird in diesem Fall auch der maximal zulässige Zahlungsfaktor überschritten, was ebenfalls entsprechend registriert wird.

Die für einen Stückelungswert maximal zulässige Anzahl kann grundsätzlich frei gewählt und bei einer Bezahlvorrichtung ggf. in gewünschter Weise auch durch einen Anwender konfiguriert werden.

Auch der maximal zulässige Überzahlfaktor kann grundsätzlich frei gewählt und bei einer Bezahlvorrichtung konfiguriert werden. Denkbar ist z.B. auch, dass der maximal zulässige Überzahlfaktor in Abhängigkeit von einer zu bezahlenden Ware oder einem Branchensegment, in dem der Bezahlvorgang stattfindet, variiert. Beispielsweise kann bei einem Bezahlvorgang in einem Elektronikgeschäft ein höherer Überzahlfaktor zulässig sein als in einem Zeitungskiosk.

Die maximal zulässige Anzahl von Münzen oder Geldscheinen pro Stückelungswert kann für unterschiedliche Stückelungswerte unterschiedlich sein. So kann die maximal zulässige Anzahl für 1-Euro-Münzen sich unterschieden von der maximal zulässigen Anzahl für beispielsweise 10-Euro-Scheine. Ebenso ist denkbar, dass die maximal zulässige Anzahl nicht statisch ist, sondern mit dem zu zahlenden Betrag variiert, so dass beispielsweise bei einem zu zahlenden Betrag von 10 Euro die zulässige Anzahl für einen Stückelungswert kleiner ist als bei einem zu zahlenden Betrag von 1000 Euro.

Gleiches kann für den maximal zulässigen Überzahlungsfaktor gelten.

Die Anzahl von Münzen oder Geldscheinen pro Stückelungswert und der Überzahlungsfaktor stellen Überwachungskriterien dar, anhand derer der Bezahlvorgang hinsichtlich eines möglichen Geldwäscheangriffs überwacht wird. Es kann hierbei bereits auf einen möglichen Geldwäschenangriff geschlossen werden, wenn für ein einziges Überwachungskriterium eine unzulässige Überschreitung festgestellt wird. Vorteilhafterweise wird aber erst dann auf einen Geldwäscheangriffe geschlossen, wenn zwei Überwachungskriterien, also eine Überschreitung der maximal zulässigen Anzahl für einen Stückelungswert und eine Überschreitung des maximal zulässigen Überzahlungsfaktors, festgestellt wird, um einen falschen Alarm nach Möglichkeit auszuschließen.

Grundsätzlich sind beliebige Gegenmaßen denkbar, die einen Geldwäscheangriff in wirksamer Weise unterbinden können. Wird beispielsweise die Auszahlung von Wechselgeld mittels der Geldausgabeeinrichtung 16 unterbunden, so erhält der Kunde kein Rückgeld und somit bei einem wahrhaftigen Geldwäscheangriff kein echtes Geld für eingegebenes Falschgeld. Der Geldwäscheangriff ist damit verhindert.

Andere Maßnahmen können beispielsweise darin bestehen, dass Aufsichtspersonal benachrichtig wird, was durch einen akustischen Alarm oder mittels einer Kommunikationseinrichtung 19 (siehe Fig. 1) erfolgen kann, die mittels der Steuereinrichtung 17 angesteuert wird und beispielsweise dazu ausgelegt ist, eine Nachricht, beispielsweise eine SMS, eine E-Mail oder eine andere Telekommunikationsnachricht, an eine zuständige Stelle zu übermitteln.

Ebenso kann die Steuereinrichtung dazu ausgelegt sein, eine Kameravorrichtung 18 (siehe Fig. 1) anzusteuern, um die Kameravorrichtung 18 bei einem Risiko für Geldwäscheangriff zu aktivieren, so dass ein potenzieller Übeltäter aufgezeichnet wird.

Eine Gegenmaßnahme kann auch darin bestehen, dass ein Ausgang eines Gebäudes angesteuert wird, um beispielsweise eine Ausgangstür zu schließen und das Verlassen des Gebäudes zu verhindern, wenn ein möglicher Geldwäscheangriff detektiert wird.

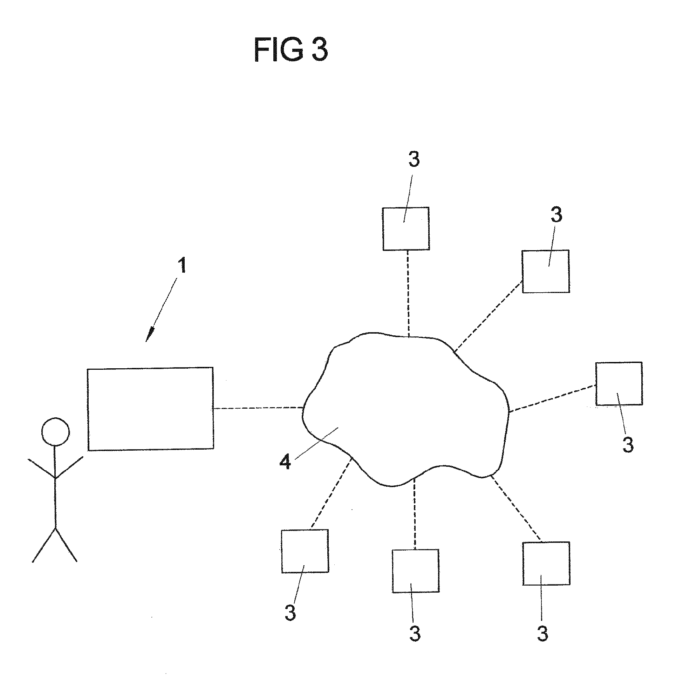

Fig. 3 zeigt in einer schematischen Ansicht eine Bezahlvorrichtung 1, die über ein Netzwerk 4 mit anderen Bezahlvorrichtungen 3 in kommunikativer Verbindung steht. Das Netzwerk 4 kann als separates, privates Kommunikationsnetzwerk ausgestaltet sein, das ausschließlich die Bezahlvorrichtungen 1, 3 zur elektronischen Datenkommunikation miteinander verbindet. Denkbar und möglich ist aber auch, dass die Kommunikation zwischen den Bezahlvorrichtungen 1, 3 über ein öffentliches Netzwerk, beispielsweise das Internet, erfolgt.

Ist die Bezahlvorrichtung 1, wie schematisch in Fig. 3 dargestellt, über ein Netzwerk 4 mit anderen Bezahlvorrichtungen 3 verbunden, so wird möglich, als Überwachungskriterium auch Bezahlvorgänge an anderen Bezahlvorrichtungen 3 auszuwerten, um aus solchen Bezahlvorgängen, die zum Beispiel innerhalb einer Region innerhalb eines bestimmten vorangegangen Zeitraums vorgekommen sind, auf eine Häufung ungewöhnlicher Bezahlvorgänge zu schließen.

Wird beispielsweise bei einem an der Bezahlvorrichtung 1 vorgenommenen Bezahlvorgang festgestellt, dass dieser Bezahlvorgang anderen Bezahlvorgängen, die an anderen Bezahlvorrichtungen 3 in einem vorangegangen Zeitraum vorgenommen worden sind, ähnelt und dabei ungewöhnliche Auffälligkeiten zeigt, so kann hieraus geschlossen werden, dass ein Geldwäscheangriff vorliegt. Wird beispielsweise bei einem Bezahlvorgang an der Bezahlvorrichtung 1 festgestellt, dass ein zu zahlender Betrag mit einer großen Anzahl von 1-Euro-Münzen bezahlt wird (dabei aber beispielsweise ein Überzahlfaktor nicht überschritten wird und somit, gemäß den Einstellungen an dieser Bezahlvorrichtung 1, an sich keine Gegenmaßnahme auszulösen wäre) und gleichzeitig bei vorangegangen Bezahlvorgängen an der gleichen Bezahlvorrichtung 1 oder an anderen Bezahlvorrichtungen 3 innerhalb eines vorangegangen, vorbestimmten Zeitraums, beispielsweise einer Woche, eine ungewöhnliche Häufung von Bezahlvorgängen aufgetreten ist, bei denen mit einer großen Anzahl von 1-Euro-Münzen gezahlt worden ist, so kann hieraus geschlossen werden, dass Falschgeld in Form von 1-Euro-Münzen in Umlauf gebracht werden soll. Es kann somit auf einen Geldwäscheangriff geschlossen werden, und es können entsprechende Gegenmaßnahmen, beispielsweise eine Alarmierung von zuständigen Stellen oder eine Unterbindung des Bezahlvorganges, erfolgen.

Es können somit als Überwachungskriterien auch örtliche und zeitliche Faktoren berücksichtigt werden, indem Bezahlvorgänge an Bezahlvorrichtungen 1, 3 innerhalb einer Region, beispielsweise innerhalb eines Stadtgebiets, ausgewertet werden, soweit sie innerhalb eines vorbestimmten Zeitraums vor dem gerade anstehenden Bezahlvorgang stattgefunden haben.

Der der Erfindung zugrunde liegende Gedanke ist nicht auf die vorangehend geschilderten Ausführungsbeispiele beschränkt. Insbesondere ist ein Verfahren zur Prävention von Geldwäscheangriffen der hier beschriebenen Art nicht beschränkt auf die Verwendung an Selbstzahlerkassen. Solche Verfahren können zweckdienlicher Weise an all solchen Vorrichtungen eingesetzt werden, die einen Bezahlvorgang mittels Bargeld ermöglichen, beispielsweise Fahrkartenautomaten, Zigarettenautomaten, Warenautomaten, Getränkeautomaten oder dergleichen.

### Bezugszeichenliste

- 1: Bezahlvorrichtung
- 10: Ablagefläche
- 11: Erfassungseinrichtung
- 12: Bildschirm
- 13: Zahleinrichtung (Münzeinwurfeinrichtung)
- 14: Zahleinrichtung (Geldscheineinführeinrichtung)
- 15: Einrichtung zum bargeldlosen Bezahlen
- 16: Geldausgabeeinrichtung
- 17: Steuereinrichtung
- 18: Kameravorrichtung
- 19: Kommunikationseinrichtung
- 2: Ware
- 3: Weitere Bezahlvorrichtungen
- 4: Netzwerk
- S1-S5: Schritte

## Patentansprüche

1. Verfahren zur Prävention von Geldwäscheangriffen an einer Bezahlvorrichtung, bei dem
- eine Steuereinrichtung (17) einer Bezahlvorrichtung (1) einen im Rahmen eines Bezahlvorgangs zu zahlenden, ersten Betrag ermittelt,
- ein zweiter Betrag an einer Zahleinrichtung (13, 14) der Bezahlvorrichtung (1) durch einen Nutzer mittels Übergabe von Bargeld gezahlt wird und
- die Steuereinrichtung (17) den gezahlten, zweiten Betrag erfasst,
**dadurch gekennzeichnet,**
**dass** die Steuervorrichtung (17) den zu zahlenden, ersten Betrag und/oder den gezahlten, zweiten Betrag anhand von mindestens einem Überwachungskriterium auswertet, in Abhängigkeit von der Auswertung auf einen möglichen Geldwäscheangriff schließt und eine Gegenmaßnahme veranlasst.

2. Verfahren nach Anspruch 1, **dadurch gekennzeichnet, dass** der zweite Betrag in Geldmünzen oder Geldscheinen gezahlt wird, wobei als Überwachungskriterium für übergebene Geldmünzen oder Geldscheine für jeden Stückelungswert die Anzahl der übergebenen Geldmünzen oder Geldscheine ausgewertet wird.

3. Verfahren nach Anspruch 2, **dadurch gekennzeichnet, dass** eine Gegenmaßnahme eingeleitet wird, wenn die Anzahl der übergebenen Geldmünzen oder Geldscheine für einen Stückelungswert eine maximal zulässige Anzahl für den Stückelungswert überschreitet.

4. Verfahren nach einem der Ansprüche 1 bis 3, **dadurch gekennzeichnet, dass** als Überwachungskriterium das Verhältnis des gezahlten, zweiten Betrags und des zu zahlenden, ersten Betrags ausgewertet wird.

5. Verfahren nach Anspruch 4, **dadurch gekennzeichnet, dass** eine Gegenmaßnahme eingeleitet wird, wenn das Verhältnis des gezahlten, zweiten Betrags und des zu zahlenden, ersten Betrags einen maximal zulässigen Überzahlfaktor überschreitet.

6. Verfahren nach einem der vorangehenden Ansprüche, **dadurch gekennzeichnet, dass** als Überwachungskriterium unterschiedliche Bezahlvorgänge innerhalb eines vorbestimmten Zeitraums an der betroffenen, ersten Bezahlvorrichtung (1) und/oder an von der betroffenen, ersten Bezahlvorrichtung (1) unterschiedlichen, weiteren Bezahlvorrichtungen (3), die mit der ersten Bezahlvorrichtung in Kommunikationsverbindung stehen, ausgewertet werden.

7. Verfahren nach einem der vorangehenden Ansprüche, **dadurch gekennzeichnet, dass** eine Gegenmaßnahme nur eingeleitet wird, wenn die Anzahl der übergebenen Geldmünzen oder Geldscheine für einen Stückelungswert eine maximal zulässige Anzahl für den Stückelungswert überschreitet und das Verhältnis des gezahlten, zweiten Betrags und des zu zahlenden, ersten Betrags einen maximal zulässigen Überzahlfaktor überschreitet.

8. Verfahren nach einem der vorangehenden Ansprüche, **dadurch gekennzeichnet, dass** als Gegenmaßnahme
- eine Auszahlung eines sich aus der Differenz von dem gezahlten, zweiten Betrag und dem zu zahlenden, ersten Betrag ergebenden Wechselbetrags unterbleibt,
- eine Kameravorrichtung zur Aufzeichnung des Nutzers aktiviert wird,
- ein akustischer Alarm ausgelöst wird
- und/oder mittels einer Kommunikationseinrichtung (19) eine Nachricht zur Alarmierung von Aufsichtspersonal erzeugt wird.

9. Bezahlvorrichtung zur Durchführung eines Bezahlvorgangs zur Durchführung eines Verfahrens zur Prävention von Geldwäscheangriffen, mit einer Steuereinrichtung (17), die ausgebildet ist, einen im Rahmen eines Bezahlvorgangs zu zahlenden, ersten Betrag zu ermitteln und einen zweiten Betrag, der an einer Zahleinrichtung (13, 14) der Bezahlvorrichtung (1) durch einen Nutzer mittels Übergabe von Bargeld gezahlt wird, zu erfassen,
**dadurch gekennzeichnet,**
**dass** die Steuervorrichtung (17) ausgebildet ist, den zu zahlenden, ersten Betrag und/oder den gezahlten, zweiten Betrag anhand von mindestens einem Überwachungskriterium auszuwerten, in Abhängigkeit von der Auswertung auf einen möglichen Geldwäscheangriff zu schließen und eine Gegenmaßnahme zu veranlassen.
